# EUROPEAN PATENT SPECIFICATION

(11) **EP 0 595 592 B1**
(45) Date of publication and mention of the grant of the patent: **15.07.1998**
(21) Application number: 93308508.6
(22) Date of filing: 26.10.1993
(51) Int. Cl.: H04M 3/42, H04M 11/02

(54) **Wide-area radio paging system**
Personenfunkrufsystem für den Fernbereich
Système de recherche de personnes de longue portée

(30) Priority: 26.10.1992 JP 287209/92
(43) Date of publication of application: 04.05.1994
(73) Proprietor: NEC CORPORATION, Tokyo (JP)
(72) Inventor: Kakihara, Masashi, c/o NEC Corporation, Minato-ku, Tokyo (JP)
(74) Representative: Abnett, Richard Charles

(56) References cited:
- GB-A- 2 174 272
- US-A- 4 178 476
- MOTOROLA TECHNICAL DEVELOPMENTS, vol.16, August 1992, SCHAUMBURG, ILLINOIS US pages 79 - 80, XP310364 MURRAY ET AL. 'Common Paging Terminal Distribution System (CPTDS)'

## Description

The present invention relates generally to wide-area radio paging systems.

In wide-area radio paging services provided by a common carrier which owns a public switched telephone network, a local calling signal from a network subscriber station to a wide-area pager is translated into the telephone numbers of the remote toll areas to which the pager is entitled to receive paging signals. While satisfactory for such common carriers, the translation of the telephone number from local to wide-area service is impossible for new common carriers, since the up-to-date telephone directory numbers of all network and pager subscribers are not available. Current wide-area paging services provided by new common carriers require manual intervention for establishing wide-area paging connections when a request is received from a network subscriber.

UK Patent Application GB-A-2 174 272 describes a wide-area paging system in which a number of paging terminals each serving a home service area are interconnected by communications links. Each paging terminal has a trunk module which is connected to a switched telephone network to receive a call, and a master memory module which stores the telephone numbers of registered pagers. If an incoming call is destined for a pager located in a paging terminal remote from the home service area of the local paging terminal, a message is sent from the local paging terminal via the communications links to the destination paging terminal where it is transmitted.

United States Patent US-A-4 178 476 describes a wide-area paging system in which satellite paging terminals are interconnected by the switched network to a transit paging terminal.

The invention is defined in claim 1 below, to which reference should now be made. Advantageous features are set forth in the appendant claims.

A preferred embodiment of the invention is described in more detail below with reference to the drawings, and takes the form of a wide-area paging system comprising a plurality of paging terminals connected to a switched communication network. Each of the paging terminals covers a home service area and provides for conversion of an incoming calling signal received from the network to a paging signal unique to the home service area and transmits the paging signal to a plurality of transmitters located in the home service area. At least one of the paging terminals comprises a memory for storing telephone numbers of pagers registered to the wide-area paging service, and determines whether a destination pager paged by the transmitted paging signal is registered to the wide-area paging service, and reads a telephone number from the memory in accordance with the incoming calling signal received from the network if the destination pager is determined to be registered to the wide-area paging service, and derives an outgoing calling signal from the read telephone number. The outgoing calling signal is then directly transmitted to another paging terminal.

The present invention will be described in further detail by way of example with reference to the accompanying drawings, in which:
**Fig. 1** is a block diagram of a wide-area paging system according to a first embodiment of the present invention; and
**Fig. 2** is a block diagram of a wide-area paging system according to a second embodiment of the present invention.

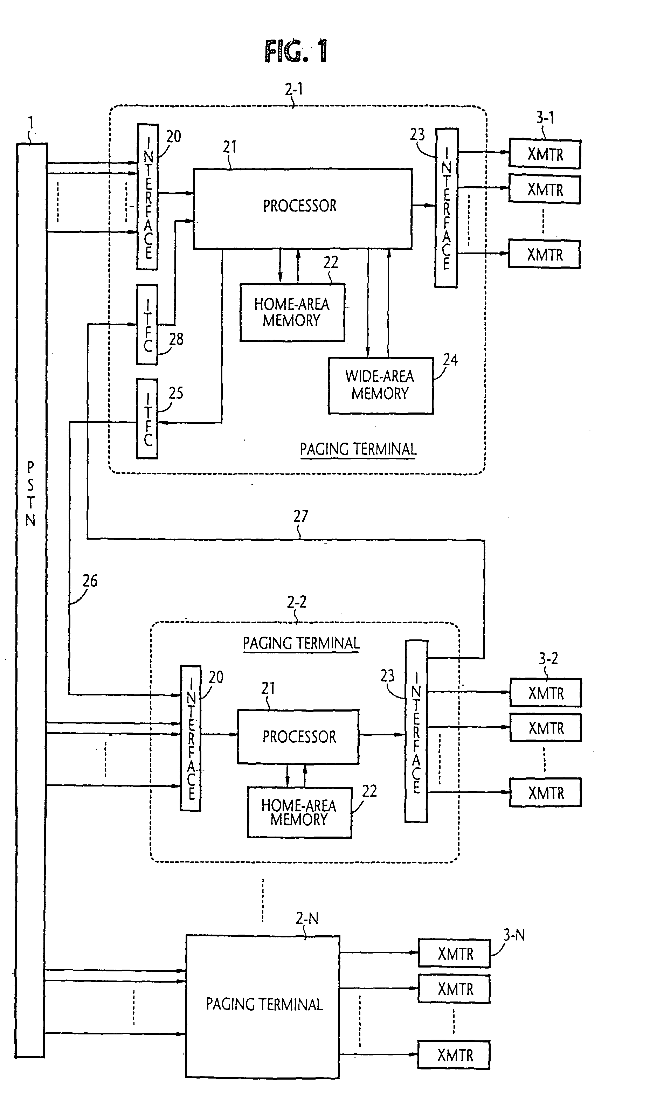

Referring now to Fig. 1, a wide-area radio paging system according to one embodiment of the present invention is shown. The wide-area radio paging system comprises a plurality of paging terminals 2-1, 2-2, ...., 2-N connected to the public switched telephone network 1. Groups of radio transmitters 3-1, 3-2, ...., 3-N are connected to the paging terminals 2-1, 2-2, ...., 2-N, respectively, for transmitting coded paging signals to pagers, not shown, registered in their respective home service areas.

At least one of the paging terminals 2-1 through 2-N, takes the form shown for paging terminal 2-1, and includes an incoming interface unit 20 for receiving from the network 1 an incoming calling signal, which is usually seven- or eight-digit telephone number addressing a destination pager. A processor 21 is connected to receive the incoming calling signal from the interface unit 20 and determines whether the addressed pager belongs to the home service area by reading data from a home-area memory 22. If it is determined that the addressed pager belongs to the home service area, processor 21 reads a corresponding binary paging signal from the home-area memory 22, containing a pager's identification code which is unique to the home area. The paging signal is then applied to an output interface unit 23 where it is encoded into a specified code format such as BCH (Bose-Chandhuri-Hocquenghem) code for error detection and correction and transmitted to the radio transmitters 3-1.

Paging terminal 2-1 further includes a wide-area memory 24 which stores telephone numbers (including toll and local area codes) of those pagers registered to wide-area paging service. An outgoing interface unit 25 is connected to the processor 21 to receive telephone numbers read from the wide-area memory 24 to transmit an outgoing calling signal to the network 1.

The other paging terminals 2-2 through 2-N are of identical construction and differs from the paging terminal 2-1 in that they are not provided with the wide-area memory 24 and interface unit 25 of paging terminal 2-1.

If an incoming calling signal received from the network is determined by the processor 21 to be for an addressed pager which is registered to the home service area, processor 21 reads a corresponding paging signal from memory 22 and applies it to the interface 23 for coding and transmission to the transmitters 3-1 in a manner just described. Processor 21 proceeds to check to see if the addressed pager is registered to the wide-area paging service. If this is the case, processor 21 reads one or more telephone numbers of the registered pager from the wide-area memory 24 and supplies them to the interface 25 where they are each converted to an outgoing calling signal. If the paging terminal 2-2 is one of such remote toll areas, this calling signal is directly transmitted from interface 25 to interface 20 of adjacent paging terminal 2-2 through a transmission line 26. This signal is treated by the processor 21 of terminal 2-2 in the same manner as it treats the incoming calling signal from the network 1. The transmitted outgoing calling signal is received at the interface 20 of this terminal 2-2 as an incoming calling signal and converted to a corresponding paging signal unique to the home area of paging terminal 2-2 and transmitted in coded format to transmitters 3-2.

Additionally, a copy of the paging signal transmitted from paging terminal 2-2 to transmitters 3-2 is received through a transmission line 27 by an input interface unit 28 of paging terminal 2-1 and applied to the processor 21. On receiving it, processor 21 of terminal 2-1 converts the received paging signal to a signal which is unique to the home area of paging terminal 2-1 using information stored in the home-area memory 22, and applies it to interface 23 for transmission to transmitters 3-1.

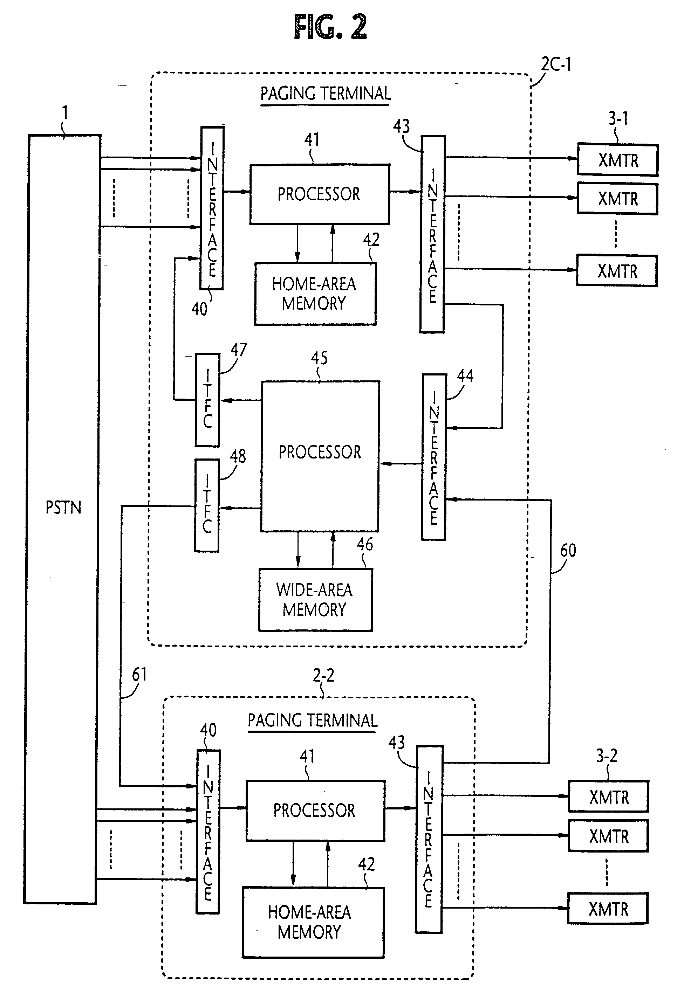

The arrangement of Fig. 1 is advantageous for incorporating the present invention into a system which is to be newly installed. A modified embodiment shown in Fig. 2 is advantageous if the present invention is to be incorporated into an existing radio paging system. In this modification, two paging terminals 2C-1 and 2-2 are connected to the PSTN 1. Each of the paging terminals 2C-1 and 2-2 includes an incoming interface unit 40 for receiving from the network 1 an incoming calling signal. A processor 41 receives the incoming calling signal via interface 40 and determines if the addressed pager belongs to the home service area by reading data from a home-area memory 42. If it is, processor 41 reads a corresponding unique binary paging signal from the home-area memory 42. The paging signal is then applied to an output interface unit 43 where it is encoded into the BCH code format and transmitted to the transmitters 3-1.

Paging terminal 2C-1 further includes an input interface unit 44 connected to receive a copy of the transmitted paging signal from the output interface 43 of paging terminal 2C-1 for conversion from the coded format to a binary paging signal. Interface 44 is further connected by a transmission line 60 to the interface unit 43 of paging terminal 2-2 for conversion to a binary paging signal. A paging signal converted by interface unit 44 is coupled to a second processor 45 to which the wide-area memory 46, identical to memory 24 of Fig. 1, is connected. On receiving the binary paging signal from interface 44, processor 45 determines whether a destination pager is registered to wide-area paging service. If it is, processor 45 reads the telephone numbers of the registered pager from memory 46 and produces outgoing calling signals corresponding to the telephone numbers. A first outgoing interface unit 47 is connected between processor 45 and the interface 40 of paging terminal 2C-1. Interface 47 applies the outgoing calling signals which were converted from the paging signal of paging terminal 2C-1 or the paging signal from adjacent paging terminal 2-2 to interface 40 of terminal 2C-1. A second outgoing interface unit 48 is provided having its input connected to processor 45 and its output connected via a transmission line 61 to the interface 40 of terminal 2-2 for transmitting the outgoing calling signals derived from the paging signal supplied from the interface 43 of terminal 2C-1 to the interface 40 of adjacent paging terminal 2-2.

On receiving a calling signal from adjacent paging terminal at the interface unit 40 of each paging terminal, each processor 41 treats it as if it were an incoming signal from the network 1 by converting it to a unique binary paging signal for coupling to the corresponding interface unit 43.

## Claims

1. A wide-area paging system comprising first and second paging terminals (2-1,2-2; 2C-1,2-2) connected to a switched communication network (1), each of said paging terminals covering a home service area and comprising:
first interface means (20; 40) for receiving an incoming calling signal from the network (1);
conversion means (21,22; 41,42,45) for converting the incoming calling signal to a paging signal unique to the home service area; and
second interface means (23; 43) for supplying the paging signal to a plurality of transmitters located in said home service area; and
in which the first paging terminal (2-1; 2C-1) further comprises:
a memory (24; 46) for storing telephone numbers of pagers registered to a wide-area paging service, the conversion means reading a telephone number from the memory corresponding to the paging signal if the pager is registered to the wide-area paging service, and producing an outgoing calling signal corresponding to the telephone number; and
third interface means (25; 48) connected to the second paging terminal for transmitting the outgoing calling signal to the first interface means (20;40) of the second paging terminal (2-2).

2. A wide-area paging system as claimed in claim 1, wherein said second paging terminal (2-2) is adapted for transmitting a paging signal if the pager is registered to the home-area paging service of the second paging terminal,
wherein said first paging terminal (2-1; 2C-1) is further adapted for receiving a paging signal directly from the second paging terminal (2-2), and the conversion means (21,22; 41,42,45) is responsive to the paging signal from the second paging terminal for reading a corresponding telephone number and producing an outgoing calling signal corresponding to that telephone number.

3. A wide-area paging system as claimed in claim 1, including fourth interface means (44) for receiving a copy of the paging signal from the second interface means (43), and wherein said conversion means comprises first converter means (41,42) for converting the incoming calling signal to a paging signal unique to the home service area, and second converter means (45) for reading a telephone number from the memory (46) corresponding to the copy of the paging signal, if the pager is registered to the wide-area paging service, and producing an outgoing calling signal corresponding to the telephone number.

4. A wide-area paging system as claimed in claim 3, wherein said second paging terminal (2-2) is adapted for transmitting a paging signal if the pager is registered to the home-area paging service of the second paging terminal,
wherein said fourth interface means (44) is further adapted for receiving a copy of the paging signal via the second interface means (43) of the second paging terminal (2-2), and said second converter means (45) is responsive to the copy of the paging signal from the second paging terminal for reading a corresponding telephone number and producing a second outgoing calling signal corresponding to that telephone number, and
wherein the first paging terminal (2C-1) further comprises a fifth interface means (47) for supplying the first interface means (40) of the first paging terminal with the second outgoing calling signal.

5. A wide-area paging system as claimed in any preceding claim, wherein the conversion means (21,22; 41,42,45) of each of said first and second paging terminals (2-1, 2-2, 2C-1, 2-2) is adapted for converting the incoming calling signal to a paging signal if a pager addressed by the incoming calling signal is registered to home-area paging service.

## Patentansprüche

1. Fernbereichspersonenrufsystem mit ersten und zweiten Personenrufendeinrichtungen (2-1, 2-2; 2C-1, 2-2), die mit einem Fernmeldewählnetz (1) verbunden sind, wobei jede der Personenrufendeinrichtungen einen Heimatdienstbereich versorgt und aufweist:
eine erste Schnittstelleneinrichtung (20; 40) zum Empfangen eines ankommenden Rufsignals aus dem Netz (1);
eine Umwandlungseinrichtung (21, 22; 41, 42, 45) zum Umwandeln eines ankommenden Rufsignals in ein Rufsignal, das für den Heimatdienstbereich eindeutig ist; und
eine zweite Schnittstelleneinrichtung (23; 43) zum Übergeben des Rufsignals an mehrere Sender, die sich in dem Heimatdienstbereich befinden; und
wobei die erste Personenrufendeinrichtung (2-1; 2C-1) ferner aufweist:
einen Speicher (24; 46) zum Speichern von Fernsprechnummern der Personenrufeinrichtungen, die bei einem Fernbereichspersonenrufdienst registriert sind, wobei die Umwandlungseinrichtung eine Fernsprechnummer aus dem Speicher liest, die dem Personenrufsignal entspricht, wenn die Personenrufeinrichtung bei dem Fernbereichspersonenrufdienst registriert ist, und ein abgehendes Rufsignal erzeugt, das der Personenrufnummer entspricht; und
eine dritte Schnittstelleneinrichtung (25; 48), die mit der zweiten Personenrufendeinrichtung zum Übertragen des abgehenden Rufsignals an die erste Schnittstelleneinrichtung (20; 40) der zweiten Personenrufendeinrichtung (2-2) verbunden ist.

2. Fernbereichspersonenrufsystem nach Anspruch 1, wobei die zweite Personenrufendeinrichtung (2-2) zum Übertragen eines Personenrufsignals aktualisiert wird, wenn die Personenrufeinrichtung bei dem Heimatbereichspersonenrufdienst der zweiten Personenrufendeinrichtung registriert ist,
wobei die erste Personenrufendeinrichtung (2-1; 2C-1) ferner zum Empfangen eines Personenrufsignals direkt von der zweiten Personenrufendeinrichtung (2-2) geeignet ist und die Umwandlungseinrichtung (21, 22; 41, 42, 45) auf das Personenrufsignal von der zweiten Personenrufendeinrichtung zum Lesen einer entsprechenden Fernsprechnummer und zum Erzeugen eines abgehenden Rufsignals, das dieser Fernsprechnummer entspricht, anspricht.

3. Fernbereichspersonenrufsystem nach Anspruch 1, mit einer vierten Schnittstelleneinrichtung (44) zum Empfangen einer Kopie des Personenrufsignals von der zweiten Schnittstelleneinrichtung (43), und wobei die Umwandlungseinrichtung aufweist: eine erste Umwandlereinrichtung (41, 42) zum Umwandeln des ankommenden Rufsignals in ein Personenrufsignal, das für den Heimatdienstbereich eindeutig ist, und eine zweite Umwandlereinrichtung (45) zum Lesen einer Fernsprechnummer aus dem Speicher (46), die der Kopie des Personenrufsignals entspricht, wenn die Personenrufeinrichtung bei dem Fernbereichspersonenrufdienst registriert ist, und zum Erzeugen eines abgehenden Rufsignals, das der Fernsprechnummer entspricht.

4. Fernbereichspersonenrufsystem nach Anspruch 3, wobei die zweite Personenrufendeinrichtung (2-2) zum Übertragen eines Personenrufsignals geeignet ist, wenn die Personenrufeinrichtung bei dem Heimatbereichspersonenrufdienst der zweiten Personenrufendeinrichtung registriert ist,
wobei die vierte Schnittstelleneinrichtung (44) ferner zum Empfangen einer Kopie des Personenrufsignals über die zweite Schnittstelleneinrichtung (43) der zweiten Personenrufendeinrichtung (2-2) geeignet ist und die zweite Umwandlereinrichtung (45) auf die Kopie des Personenrufsignals von der zweiten Personenrufendeinrichtung zum Lesen einer entsprechenden Fernsprechnummer und zum Erzeugen eines zweiten abgehenden Rufsignals, das dieser Fernsprechnummer entspricht, anspricht und
wobei die erste Personenrufendeinrichtung (2C-1) ferner eine fünfte Schnittstelleneinrichtung (47) zum Versorgen der ersten Schnittstelleneinrichtung (40) der ersten Personenrufendeinrichtung mit dem zweiten abgehenden Rufsignal aufweist.

5. Fernbereichspersonenrufsystem nach einem der vorhergehenden Ansprüche, wobei die Umwandlungseinrichtung (21, 22; 41, 42, 45) jeder der ersten und der zweiten Personenrufendeinrichtungen (2-1, 2-2 2C-1, 2-2) zum Umwandeln des ankommenden Rufsignals in ein Personenrufsignal geeignet ist, wenn eine Personenrufeinrichtung, die durch das ankommende Rufsignal angesprochen wird, bei einem Heimatbereichspersonenrufdienst registriert ist.

## Revendications

1. Système de recherche de personnes de longue portée comprenant des premier et deuxième terminaux de recherche de personnes (2-1, 2-2 ; 2C-1, 2-2) connectés à un réseau de télécommunications commuté (1), chacun desdits terminaux de recherche de personnes couvrant une zone de service domestique et comprenant :
un premier moyen d'interface (20 ; 40) pour recevoir un signal d'appel entrant, provenant du réseau (1) ;
des moyens de conversion (21, 22 ; 41, 42, 45) pour convertir le signal d'appel entrant en un signal de recherche de personnes propre à la zone de service domestique ; et,
un deuxième moyen d'interface (23 ; 43) pour fournir le signal de recherche de personnes à une pluralité d'émetteurs situés dans ladite zone de service domestique ; et,
dans lequel le premier terminal de recherche de personnes (2-1 ; 2C-1) comprend en outre :
une mémoire (24 ; 26) pour stocker des numéros de téléphone de récepteurs de recherche de personnes enregistrés pour un service de recherche de personnes de longue portée, les moyens de conversion lisant un numéro de téléphone dans la mémoire correspondant au signal de recherche de personnes si le récepteur de recherche de personnes est enregistré pour le service de recherche de personnes de longue portée, et produisant un signal d'appel sortant correspondant au numéro de téléphone ; et,
un troisième moyen d'interface (25 ; 48) connecté au deuxième terminal de recherche de personnes pour transmettre le signal d'appel sortant au premier moyen d'interface (20 ; 40) du deuxième terminal de recherche de personnes (2-2).

2. Système de recherche de personnes de longue portée selon la revendication 1, dans lequel ledit deuxième terminal de recherche de personnes (2-2) est adapté pour transmettre un signal de recherche de personnes si le récepteur de recherche de personnes est enregistré pour le service de recherche de personnes de zone domestique du deuxième terminal de recherche de personnes,
dans lequel ledit premier terminal de recherche de personnes (2-1 ; 2C-1) est en outre adapté pour recevoir un signal de recherche de personnes directement du deuxième terminal de recherche de personnes (2-2), et les moyens de conversion (21, 22 ; 41, 42, 45) réagissent au signal de recherche de personnes provenant du deuxième terminal de recherche de personnes pour lire un numéro de téléphone correspondant et produire un signal d'appel sortant correspondant à ce numéro de téléphone.

3. Système de recherche de personnes de longue portée selon la revendication 1, incluant un quatrième moyen d'interface (44) pour recevoir une copie du signal de recherche de personnes du deuxième moyen d'interface (43), et dans lequel lesdits moyens de conversion comprennent un premier moyen convertisseur (41, 42) pour convertir le signal d'appel entrant en un signal de recherche de personnes propre à la zone de service domestique, et un second moyen convertisseur (45) pour lire un numéro de téléphone dans la mémoire (46) correspondant à la copie du signal de recherche de personnes, si le récepteur de recherche de personnes est enregistré pour le service de recherche de personnes de longue portée, et produire un signal d'appel sortant correspondant au numéro de téléphone.

4. Système de recherche de personnes de longue portée selon la revendication 3, dans lequel ledit deuxième terminal de recherche de personnes (2-2) est adapté pour transmettre un signal de recherche de personnes si le récepteur de recherche de personnes est enregistré pour le service de recherche de personnes de zone domestique du deuxième terminal de recherche de personnes,
dans lequel ledit quatrième moyen d'interface (44) est en outre adapté pour recevoir une copie du signal de recherche de personnes par le deuxième moyen d'interface (43) du deuxième terminal de recherche de personnes (2-2), et ledit deuxième moyen convertisseur (45) réagit à la copie du signal de recherche de personnes provenant du deuxième terminal de recherche de personnes pour lire un numéro de téléphone correspondant et produire un second signal d'appel sortant correspondant à ce numéro de téléphone, et
dans lequel le premier terminal de recherche de personnes (2C-1) comprend en outre un cinquième moyen d'interface (47) pour fournir, au premier moyen d'interface (40) du premier terminal de recherche de personnes, le second signal d'appel sortant.

5. Système de recherche de personnes de longue portée selon l'une quelconque des revendications précédentes, dans lequel les moyens de conversion (21, 22 ; 41, 42, 45) de chacun des premier et deuxième terminaux de recherche de personnes (2-1, 2-2 ; 2C-1, 2-2) sont adaptés pour convertir le signal d'appel entrant en un signal de recherche de personnes si un récepteur de recherche de personnes adressé par le signal d'appel entrant est enregistré pour un service de recherche de personnes de zone domestique.
